# EUROPEAN PATENT APPLICATION

(11) **EP 4 804 129 A1**
(43) Date of publication of application: **09.09.2026**
(21) Application number: 24885023.2
(22) Date of filing: 02.11.2024
(51) Int. Cl.: G06T 11/00

(54) **IMAGE RECONSTRUCTION METHOD AND SYSTEM BASED ON SPARSE GRAPH SET**

(30) Priority: 03.11.2023 CN 202311457780
(71) Applicant: Nanovision (Nanjing) Technology Group Co., Ltd., Nanjing, Jiangsu 211102 (CN)
(72) Inventor: WANG, Yukang, Beijing 100094 (CN); MA, Chunliang, Beijing 100094 (CN); CHA, Keyang, Beijing 100094 (CN); LUO, Shouhua, Beijing 100094 (CN); YANG, Yue, Beijing 100094 (CN); LI, Yunxiang, Beijing 100094 (CN)
(74) Representative: Wang, Bo
(86) International application number: PCT/CN2024/129542
(87) International publication number: WO 2025/093027

(57) **Abstract**

An image reconstruction method and system based on a sparse view set are provided. The method includes the following steps: obtaining a sparse angle projection graph set through CT scanning; performing back projection on the sparse angle projection graph set, to obtain an initial iteration value of volume data; calculating initial values of three directional gradient fields of the initial iteration value of the volume data; respectively calculating an orthographic projection and a back projection of a residual based on the initial iteration value of the volume data and the initial values of three gradient fields; performing, through a neural network, regularization processing on data having undergone the orthographic projection and data having undergone the residual back projection by using the initial values of the three directional gradient fields; and performing addition on an integral of the volume data and the gradient fields to serve as an initial value for a next iteration, performing iteration again until completion, and outputting a result. Through the method, projection data required for reconstruction can be obtained within a short period of time, and a problem of a sparse angle/finite angle can be effectively processed, to obtain a high-quality image reconstruction result.

## Description

### BACKGROUND

### Technical Field

The present invention relates to an image reconstruction method based on a sparse view set, and also relates to a corresponding image reconstruction system, which belongs to the technical field of digital image processing.

### Related Art

During scanning of an object by a static CT system, a radiation source and a detector of the static CT system remain stationary or only rotate within a small range. Technical advantages of this scanning manner include the following. First, the scanning manner no longer relies on a complex slip-ring structure, simplifying the device design. Second, a scanning speed is significantly increased due to reduced mechanical motion, thereby increasing a temporal resolution. Besides, image smearing that may be caused by high-speed motion is avoided, thereby increasing a spatial resolution. However, because projection geometry of the static CT system is different from that of a conventional spiral CT system, a new iterative reconstruction algorithm needs to be developed to effectively process sparse angle or finite angle projection data. In addition, an efficient orthographic/back projection operator applicable to splicing of multi-panel detectors further needs to be developed, to meet an imaging requirement of the static CT system.

### SUMMARY

A primary technical problem to be resolved in the present invention is to provide an image reconstruction method based on a sparse view set.

Another technical problem to be resolved in the present invention is to provide an image reconstruction system based on a sparse view set.

To achieve the foregoing technical objective, the present invention adopts the following technical solutions.

According to a first aspect of embodiments of the present invention, an image reconstruction method based on a sparse view set is provided, including the following steps:
obtaining a sparse angle projection graph set through CT scanning;
performing back projection on the sparse angle projection graph set, to obtain an initial iteration value of volume data;
calculating initial values of three directional gradient fields of the initial iteration value of the volume data;
respectively calculating an orthographic projection and a back projection of a residual based on the initial iteration value of the volume data and the initial values of the three gradient fields;
performing, through a neural network, regularization processing on data having undergone the orthographic projection and data having undergone the residual back projection by using the initial values of the three directional gradient fields; and
performing addition on an integral of the volume data and the gradient fields to serve as an initial value for a next iteration, performing iteration again until completion, and outputting a result.

Preferably, the regularization processing includes performing the regularization processing in four directions of Dₓ, D_{y}, D_{z}, and I, where *Dₓ, D_{y}*, *D_{z}* represent directional gradient operators calculated in the three directions of x, y, and z.

Preferably, the regularization includes performing Φ(D) expansion computation, to implement expansion of tensorized operator (TPO) data in all directions by using the directional gradient operators *Dₓ, D_{y}*, *D_{z}.*

Φ(D) represents a network for sparsifying a directional gradient, D ∈ {Dₓ, D_{y}, D_{z}, I}, and four sub-networks share weights in all iterations.

Preferably, the regularization is implemented by converting features into a sparse space through an encoder, then performing feature weighting on an image in the sparse space by using a shrinkage thresholding function, and finally restoring the image to an original size through a decoder.

Preferably, the shrinkage thresholding function I(x; µ') is represented as I(f; µ') = sign(f)max (|f| - µ', 0),
where f represents an output of the encoder, and µ' represents a shrinkage threshold and is related to coefficients µₓ, µ_{y}, and µ_{z}.

Preferably, the TPO data is obtained through the following equations: ${z}_{k} = {ω}_{k} + {λH}^{T} \left({Hω}_{k}-p\right)$ ${z}_{k}^{x} = {D}_{x} {ω}_{k}^{x} + λ {D}_{x} {H}^{T} \left({Hω}_{k}^{x}-p\right)$ ${z}_{k}^{y} = {D}_{y} {ω}_{k}^{y} + {λD}_{y} {H}^{T} \left({Hω}_{k}^{y}-p\right)$ ${z}_{k}^{z} = {D}_{z} {ω}_{k}^{z} + {λD}_{z} {H}^{T} \left({Hω}_{k}^{z}-p\right)$ where k represents a current iteration round, λ represents an iteration step size, *ωₖ* represents a k^{th} iteration result of ω, $ω = {D}_{x}^{T} d$*,* d refers to a gradient field during iteration, **H**ω represents projection data of the orthographic projection process in reconstructed data, and H^{T}ω represents projection data of the back projection in the reconstructed data.

Preferably, the performing addition on an integral of the volume data and the gradient fields refers to performing addition on the integral of the volume data and the gradient fields to obtain volume data ***ω**ₖ* of a quantity of current iterations: ${ω}_{k} = {P}_{c} \left({ω}_{k - 1}+{D}_{x}^{T}{d}_{k}+{D}_{y}^{T}{d}_{k}+{D}_{z}^{T}{d}_{k}\right)$ where P_{c}(·) represents a non-negative constraint, and ${D}_{x}^{T} , {D}_{y}^{T}$*,* and ${D}_{z}^{T}$ respectively represent inverse operations of the directional gradient operators *Dₓ, D_{y}*, D_{z} in the directions of x, y, and z.

Preferably, before the step of performing addition on the integral of the intermediate values of the volume data and the intermediate values of the gradients, the method further includes performing Nesterov acceleration processing on the three directional gradient fields.

Preferably, the acceleration processing is calculated through the following equation: ${d}_{k + 1} = {g}_{k} + \frac{{t}_{k - 1} - 1}{{t}_{k}} \left({g}_{k}-{g}_{k - 1}\right)$ where k is the current iteration round, tₖ is a factor for the Nesterov acceleration processing, *gₖ* is a directional gradient field in one of the directions x, y, and z for the current iteration round, ***dₖ*=D***ωₖ,* and D represents the directional gradient operators *Dₓ, D_{y}, D_{z}.*

According to a second aspect of embodiments of the present invention, an image reconstruction system based on a sparse view set is provided, including a processor and a memory. The processor reads a computer program in the memory, to implement the foregoing image reconstruction method based on a sparse view set.

Compared with the prior art, through the image reconstruction method and system provided in the present invention, projection data required for reconstruction can be obtained within a short period of time, and a problem of a sparse angle/finite angle can be effectively processed, to obtain a high-quality reconstruction result. This is particularly suitable for application in a static CT system.

### BRIEF DESCRIPTION OF THE DRAWINGS

FIG. 1 is a schematic diagram of a projection structure of a static CT system;
FIG. 2 is a schematic diagram of projection operators under different projection geometries;
FIG. 3 is a schematic diagram of a distribution of projection angles of static CT scanning;
FIG. 4 is a schematic diagram of an operating principle of a directional TV-based iterative network DTV-NET;
FIG. 5 is a schematic diagram of a symmetrical structure of an encoder and a decoder;
FIG. 6 is a schematic flowchart of an image reconstruction method according to an embodiment of the present invention;
FIG. 7(a) is a comparison diagram of effects of different image reconstruction methods evaluated based on indexes of AAPM data sets;
FIG. 7(b) is a comparison diagram of effects of different image reconstruction methods evaluated based on indexes of Cq500 data sets;
FIG. 7(c) is a comparison diagram of effects of different image reconstruction methods evaluated based on anthropomorphic phantom indexes;
FIG. 7(d) is a comparison diagram of effects of different image reconstruction methods evaluated based on indexes of an anthropomorphic head model; and
FIG. 8 is a schematic structural diagram of an image reconstruction system according to an embodiment of the present invention.

### DETAILED DESCRIPTION

Technical content of the present invention is described in detail below with reference to the accompanying drawings and specific embodiments.

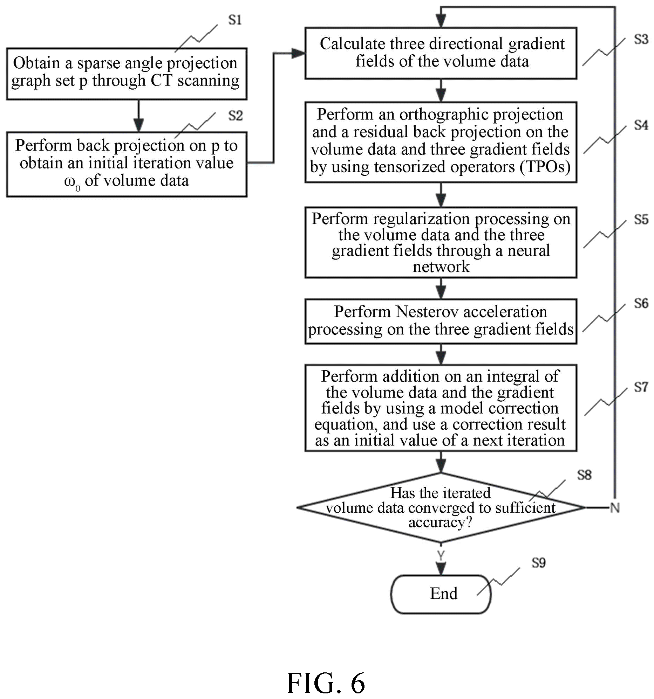

As shown in FIG. 6, an image reconstruction method provided in embodiments of the present invention mainly includes the following steps.

S1: Obtain a sparse angle projection graph set p through CT scanning.

In an embodiment of the present invention, a static CT system is used as an example for description. However, the image reconstruction method provided in embodiments of the present invention is not limited to image processing obtained through scanning by the static CT system, or may be image processing of a sparse angle projection graph set obtained in another scanning manner.

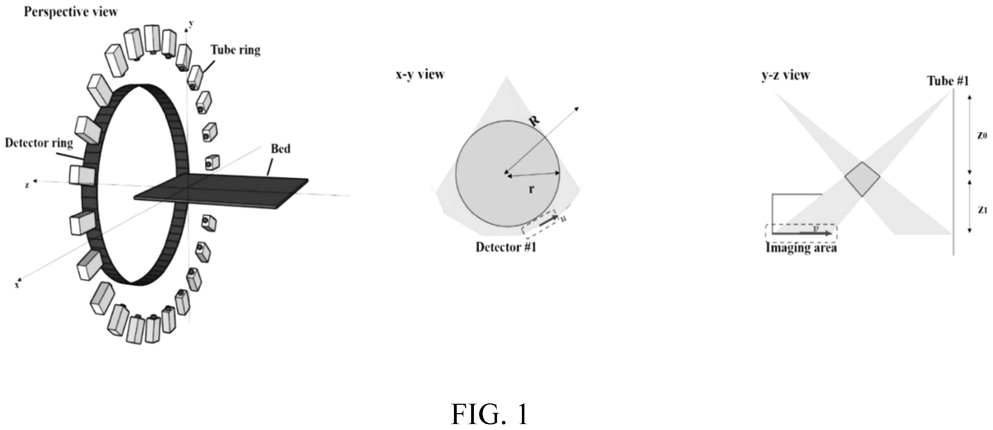

In the static CT system, radiation sources are integrated into a ring structure. Detectors are integrated into another ring structure. The two ring structures are arranged substantially parallel to each other, or arranged coaxially (along a z-axis). Specifically, as shown in FIG. 1, a detector ring of the static CT system is a polygonal structure (similar to a ring, but not a ring structure) spliced together by a plurality of sub-panels.

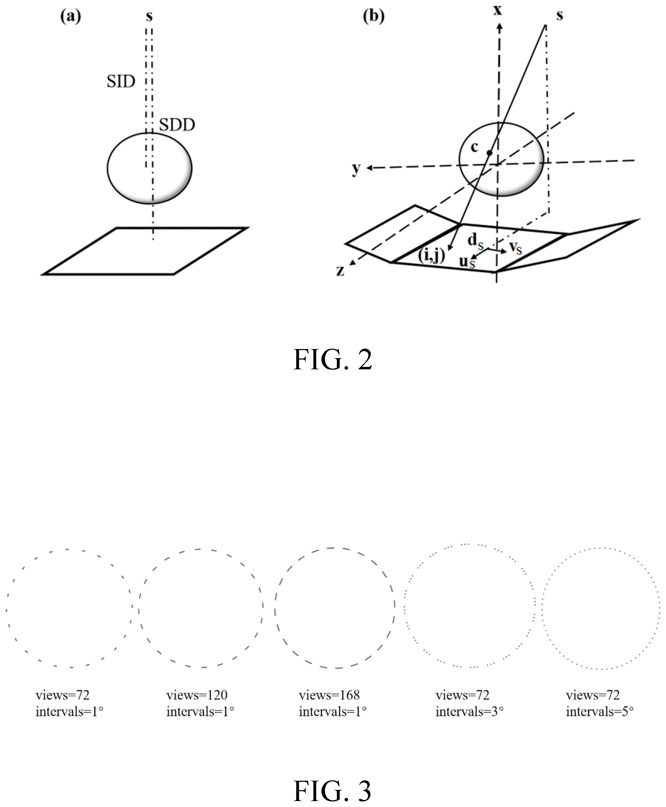

It is known that as a linear operation, projection may theoretically be constructed by using a multilayer perceptron (MLP). However, in an actual application scenario, due to an extremely large dimensionality of a cone-beam projection matrix, a densely connected perceptron has a huge quantity of weight parameters, which is infeasible for application. To resolve the problem, an orthographic projection and a back projection may be converted into a hidden layer expressed in a tensorized form. The orthographic projection is pixel-driven through accumulation of a ray corresponding to each pixel of a detector passing through a voxel. The back projection is voxel-driven through calculation of a ratio of a corresponding pixel value of a voxel to a ray length. The orthographic projection and the back projection form a tensorized operator (TPO) of a system matrix. For an ideal circular trajectory, as shown in part a of FIG. 2, a radiation source, a rotation center, and a center of a flat panel detector are collinear. The tensorized operator at an angle may be determined by a source-to-image distance (SID) and a source to detector distance (SDD). However, in the prior art, a polygonal detector structure is directly regarded as a ring structure for the orthographic projection and the back projection, which results in a relatively large result error. Therefore, in embodiments of the present invention, an orthographic and back projection model shown in part b of FIG. 2 is used, that is, a non-circular trajectory geometry with a cone angle is used. A tensorized operator for sub-detector projection at each angle is represented by the following quantities: 1) center point coordinates as of a detector; 2) a pair of orthogonal direction vectors passing through a center of the detector and located in a plane of the detector; and 3) position coordinates of each radiation source.

Correspondingly, in embodiments of the present invention, calculation of the orthographic projection and the back projection in a reconstruction algorithm is implemented as a Tensorized Operator (TPO), and the TPO is used as a layer of a deep iterative network, to complete an iteration process of the orthographic projection and the back projection in the deep iterative network, thereby implementing a closed loop in training of a reconstructed network model.

In addition, a #1 radiation source (Tube #1) is used as an example. Viewed in a y-z plane (y-z view), an X-ray emitted from the plane is incident at an oblique angle onto an imaging area of the corresponding detector. In the industry, the foregoing z-axis refers to a direction in which a patient couch for CT examination is moved into and out of a CT system, the x-axis is an axis perpendicular to the z-axis in a horizontal plane, and the y-axis is a vertical axis perpendicular to an x-z plane.

Therefore, to adapt to a multi-source multi-panel imaging model of the static CT system that supports an oblique cone angle, a specific tensorized operator for projection needs to be designed for axial scan data of the static CT system.

The static CT system has two common scanning manners. The first scanning manner and the second scanning manner are separately described in embodiments of the present invention. An example in which 24 radiation sources and 64 detectors are provided in both the scanning manners is used.

The first scanning manner is static scanning with a focus point shift. The radiation sources and the detectors remain completely stationary during scanning. The 24 radiation sources are exposed in sequence, and generate projections at 24 angles, which form a set of projection data. Upon completion of exposure of a set of projections, an electromagnetic deflection apparatus in the radiation source acts on an electron beam, causing a shift in a focus point of a bulb tube, to perform a next exposure. A small rotation angle is formed between a set of data generated in this way and a previous set of data. The process is repeated to obtain 24 projection data clusters.

The second scanning manner is small-range rotary scanning. This scanning manner is similar to the first scanning manner, and a difference lies in that during the scanning, the sources and the detectors perform slow mechanical rotation together. To be specific, after each exposure of a set of 24 projection images, rotation is performed by a small angle, and then a next exposure is performed.

FIG. 3 is a distribution diagram of projection angles of static CT scanning. As shown in FIG. 3, a circumference represents a 360° scanning angle, and points on the circumference indicate that a projection image exists at the angle.

Regardless of a scanning manner adopted, in each scan, a group of projection graph sets with both sparse angles (a degree of angle of projection is less than 360°) and finite angles (angle sampling cannot uniformly cover 360°) are collected. These projection graph sets are represented as p. To be specific, a sparse angle projection graph set p has both a sparse angle and a finite angle. The sparse angle means that a total quantity of projection angles is less than 360, and the finite angle means that a set of projection angles cannot uniformly cover an entire 360° range.

S2: Perform back projection on the sparse angle projection graph set p, to obtain an initial iteration value ω₀ of volume data.

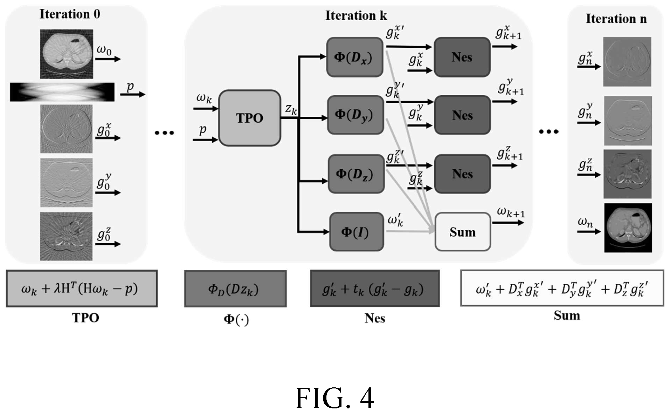

As shown in FIG. 4, an initial iteration value ω₀ of volume data ω is constructed by reconstructing the sparse angle projection graph set p (for example, by using a simultaneous iterative reconstruction technique (SIRT) iteration algorithm), where tensorized operators (TPOs) are used in a process of an orthographic projection and a back projection in the SIRT iteration algorithm.

S3: Calculate initial values ${g}_{0}^{x} , {g}_{0}^{y}$, and ${g}_{0}^{z}$ of three directional gradient fields of the initial iteration value of the volume data.

As shown in FIG. 4, the three directional gradient fields ${g}_{0}^{x} , {g}_{0}^{y}$*,* and ${g}_{0}^{z}$ respectively represent initial values (k = 0) of gradient fields in three directions of x, y, and z. ω₀ is the initial value of the volume data, and gradients of ω₀ in the directions of x, y, and z are directly calculated to obtain ${g}_{0}^{x} , {g}_{0}^{y}$, and ${g}_{0}^{z}$.

A person skilled in the art may understand that step S2 and step S3 may be performed simultaneously, or may be performed in a reverse order. This is not limited herein, and is merely used as an example.

S4: Calculate an orthographic projection and a back projection based on the initial iteration value of the volume data, the initial values of the three directional gradient fields, and the sparse angle projection graph set, to obtain TPO data.

The TPO data is obtained through calculation by using TPOs of the orthographic projection and the back projection. As shown in FIG. 4, the TPO data obtained through calculation by using the TPOs is calculated from the following equations: $\begin{matrix}{z}_{k} = {ω}_{k} + {λH}^{T} \left({Hω}_{k}-p\right) \\ {z}_{k}^{x} = {D}_{x} {ω}_{k}^{x} + λ {D}_{x} {H}^{T} \left({Hω}_{k}^{x}-p\right) \\ {z}_{k}^{y} = {D}_{y} {ω}_{k}^{y} + {λD}_{y} {H}^{T} \left({Hω}_{k}^{y}-p\right) \\ {z}_{k}^{z} = {D}_{z} {ω}_{k}^{z} + {λD}_{z} {H}^{T} \left({Hω}_{k}^{z}-p\right)\end{matrix}$ where k represents a current iteration round, λ represents an iteration step size, *ωₖ* represents a k^{th} iteration result of ω, $ω = {D}_{x}^{T} d$*,* **H**ω represents projection data of the orthographic projection process in reconstructed data, **H**^{T}ω represents projection data of the back projection in the reconstructed data, d herein refers to a gradient field during the iteration, and after an inverse operation of the directional gradient operator is performed on the gradient field, the volume data **ω** is recovered.

S5: Perform regularization processing on the TPO data in four directions of x, y, z, and I through a neural network, to obtain intermediate values of gradients and intermediate values of the volume data in three directions.

As shown in FIG. 4, the TPO data is expanded to three directions by using directional gradient operators in the three directions, and is expanded in the I direction, to obtain expanded data. Expansion means expanding the volume data into the volume data plus gradient fields in three directions of the volume data (that is, the data is expanded by a factor of 4).

**Φ**(D) (which may be considered as a Prox operator) may be understood as that an image is inputted into the neural network to perform a regularization operation, and after the regularization operation is performed on z, g is obtained. For example, the regularization operation (that is, passing through the **Φ**(D) layer) is performed on each of **Zₖ,** ${z}_{k}^{x} , {z}_{k}^{y}$*,* and ${z}_{k}^{z}$, to obtain intermediate values ${ω}_{k}^{′}$ of the volume data and intermediate values of the gradients in three directions ${g}_{k}^{x ′} , {g}_{k}^{y ′}$, and ${g}_{k}^{z ′}$.

Herein, **Φ**(D) represents a network for sparsifying (or regularizing) a directional gradient, D ∈ {Dₓ, D_{y}, D_{z}, I}, and four sub-networks share weights in all iterations.

Expansion computation by using **Φ**(D) refers to separately calculating directional gradient operators *Dₓ, D_{y}*, *D_{z}* based on three directions of three-dimensional volume data, expanding volume data *Zₖ* processed through the TPO in all directions, and further performing regularization **Φ**(*Dₓ*) on the x-direction gradient field, regularization **Φ(*D_{y}*)** on the y-direction gradient field, sparsification **Φ(*D_{z}*)** on the z-direction gradient field, and regularization **Φ(*I*)** on the volume data.

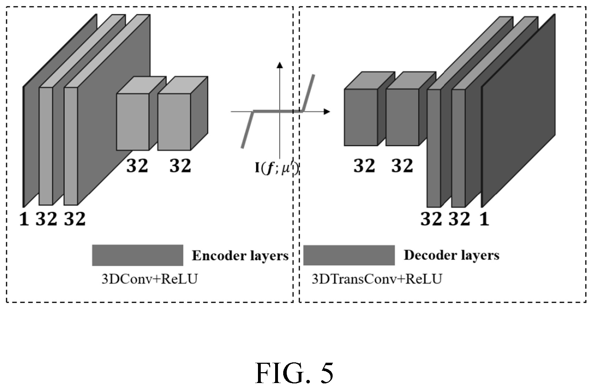

It needs to be noted that the regularization in embodiments of the present invention is implemented by converting features into a sparse space through an encoder, then performing feature weighting on an image in the sparse space by using a shrinkage thresholding function, and finally restoring the image to an original size through a decoder. The encoder and the decoder are symmetrical. The encoder is shown in FIG. 5. The encoder includes 5 layers of 3D convolutional layers, and sizes of convolution kernels are all 3 × 3 × 3. The decoder is symmetrical to the encoder, and the image is gradually restored through deconvolution. The shrinkage thresholding function I(x; µ') is shared between the encoder and the decoder.

A value of the shrinkage thresholding function being less than a shrinkage threshold indicates that the voxel does not need to be sparsified (regularized), and the value of the shrinkage thresholding function being greater than the shrinkage threshold indicates that the voxel needs to be sparsified (regularized). The two steps may be uniformly represented by using the shrinkage thresholding function.

The shrinkage thresholding function I(x; µ') is represented as: $I \left(f; μ′\right) = sign \left(f\right) max \left(\left|f\right|-μ′,0\right)$ where f represents an output of the encoder, and µ' represents a shrinkage threshold and is related to regular term coefficients µₓ, µ_{y}, and µ_{z}. µ' is similar to the iteration step size and an acceleration factor, or may be set as a learnable network parameter.

S6: Perform Nesterov acceleration processing on three gradient fields.

As shown in FIG. 4, based on the initial values of the three gradient fields ${g}_{0}^{x} , {g}_{0}^{y}$*,* and ${g}_{0}^{z}$, the Nesterov acceleration processing (indicated by "Nes" in the figure) is performed according to the following equation, to obtain ${g}_{k + 1}^{x} , {g}_{k + 1}^{y}$, and ${g}_{k + 1}^{z}$: ${g}_{k + 1} = {g}_{k}^{′} + {t}_{k} \left({g}_{k}^{′}-{g}_{k}\right)$ where k is the current iteration round, tₖ is a factor for the Nesterov acceleration processing, *gₖ* is a directional gradient field in one of the directions x, y, and z for the current iteration round (for example, when k = 0, *gₖ* is one of ${g}_{0}^{x} , {g}_{0}^{y}$*,* and ${g}_{0}^{z}$)*,* and ${g}_{k}^{′}$ is an intermediate iteration variable, and is one of intermediate values ${g}_{k}^{x ′} , {g}_{k}^{y ′}$, and ${g}_{k}^{z ′}$ of gradients in the three directions.

S7: Perform addition on an integral of the intermediate values of the volume data and the intermediate values of the gradients to serve as an initial value for a next iteration.

As shown in FIG. 4, addition is performed on the integral of the volume data and the gradient fields to obtain the volume data ***ωₖ*** of a quantity of current iterations, and ***ωₖ*** is calculated through the following equation: ${ω}_{k} = {P}_{c} \left({ω}_{k - 1}+{D}_{x}^{T}{d}_{k}+{D}_{y}^{T}{d}_{k}+{D}_{z}^{T}{d}_{k}\right)$

To be specific, a sum of ${ω}_{k}^{′} + {D}_{x}^{T} {g}_{k}^{x ′} + {D}_{y}^{T} {g}_{k}^{y ′} + {D}_{z}^{T} {g}_{k}^{z ′}$ is calculated.

P_{c}(·) represents a non-negative constraint, and ${D}_{x}^{T} , {D}_{y}^{T}$*,* and ${D}_{z}^{T}$ respectively represent inverse operations of the directional gradient operators *Dₓ, D_{y}*, *D_{z}* in the directions of x, y, and z.

S8: Output the volume data during the iteration as a result after a predetermined quantity of iterations.

It may be learned that through the image reconstruction method provided in embodiments of the present invention, a gradient is first converted into a sparse space through an encoder, then feature weighting is performed on an image in the sparse space by using a shrinkage thresholding function, and finally the image is restored to an original size through a decoder. The encoder and the decoder are symmetrical. Therefore, the image reconstruction method provided in embodiments of the present invention enables more accurate image pixels, more complete image structure information, and a stronger anti-sparsity capability of a network.

For ease of understanding, a modeling process of the image reconstruction method provided in embodiments of the present invention is further described below.

The image reconstruction problem in static CT geometry may be represented by the image reconstruction model in which a directional total variation (TV) is a regular term: ${argmin}_{ω} \frac{1}{2} {\left‖Hω-p\right‖}_{2}^{2}$ $s . t . {\left|{D}_{x}ω\right|}_{1} \leq {δ}_{x} , {\left|{D}_{y}ω\right|}_{1} \leq {δ}_{y} , {\left|{D}_{z}ω\right|}_{1} \leq {δ}_{z} , ω \geq 0$ where ω is three-dimensional volume data, p represents projection data, **H** is a projection transformation matrix, Dₓ*,* D_{y}, and D_{z} represent calculating directional gradient operators of the three-dimensional volume data in three directions, δₓ, δ_{y}, δ_{z} respectively represent retention thresholds of gradients in the three directions, and Hω and H*^{T}*ω represent a process of the orthographic projection and the back projection in the reconstructed data, and may be represented by TPOs of the orthographic projection and the back projection.

For the foregoing Equation (6), a generalized real-valued function may be used to eliminate a constraint condition, then a Lagrange function of an original problem polynomial is solved, and then is converted into a dual problem and solved by using a CP algorithm. In essence, the process is still to solve a sparse solution with respect to the gradient for the gradient space of the image by regularizing *l*₁. Preferably, the present invention provides a more reasonable sparse representation of the gradient space, which is beneficial for better artifact removal and edge protection, reducing the quantity of iterations, and improving program efficiency.

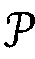 *,* 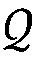 *,* and 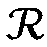 are used to respectively represent a transformation space in the three directions, and Equation (6) is represented as: $\begin{matrix}{argmin}_{ω} \frac{1}{2} {\left‖Hω-p\right‖}_{2}^{2} + {μ}_{x} {\left|P\left({D}_{x}ω\right)\right|}_{1} + {μ}_{y} {\left|Q\left({D}_{y}ω\right)\right|}_{1} + {μ}_{z} {\left|R\left({D}_{z}ω\right)\right|}_{1} \\ s . t . ω \geq 0\end{matrix}$ where µₓ, µ_{y}, and µ_{z} respectively represent sparsity of gradient space constraint terms in the three directions. In addition, a first-norm transformation space in an image domain is further introduced based on Equation (7): $\begin{matrix}{argmin}_{ω} \frac{1}{2} {\left‖Hω-p\right‖}_{2}^{2} + {μ}_{x} {\left|P\left({D}_{x}ω\right)\right|}_{1} + {μ}_{y} {\left|Q\left({D}_{y}ω\right)\right|}_{1} + {μ}_{z} {\left|R\left({D}_{z}ω\right)\right|}_{1} + μ {\left|F\left(Iω\right)\right|}_{1} \\ s . t . ω \geq 0\end{matrix}$ where **µ** represents a coefficient of an image space constraint term, and I represents an identity matrix. In Equation (8), a first term is a fidelity term of an ordinary iterative algorithm, a second term, a third term, and a fourth term are regular terms of gradient fields of the volume data in three directions x, y, and z, and a fifth term is a regular term of the volume data. It may be learned that in addition to the three-dimensional volume data, the gradient fields of the three-dimensional volume data in the three directions are further used as acting objects of regularization operators, to improve reconstruction quality.

In iterative CT reconstruction of sparse angle data, during reconstruction of volume data, sparse angle radial artifacts are inevitably generated, and are represented as divergent or windmill-shaped line artifacts. Through the algorithm described in the present invention, in a manner of calculating the gradients of the volume data in all directions, features of the line-shaped artifacts may be extracted to be distinguished from surrounding relatively smooth normal tissue structures. In this way, an amount of data for training the neural network may thus be quadrupled (the volume data + three gradient fields), and the artifact features of the volume data are also better represented. This is beneficial to the training of the neural network, and may greatly improve accuracy of regularization, thereby accelerating convergence of the iteration algorithm.

For simplicity, only the x direction is discussed herein, and situations of the y direction and the z direction are similar. Details are not described again.

Let d = Dₓω, and $ω = {D}_{x}^{T} d$*.* Equation (8) may be directly converted into optimization of d. The problem may be converted into: ${argmin}_{d} \frac{1}{2} {\left‖H{D}_{x}^{T}d-p\right‖}_{2}^{2} + {μ}_{x} {\left|d\right|}_{1} s . t . ω \geq 0$

For the directional TV, such conversion means a faster iteration rate. Since 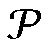 is converted to satisfy 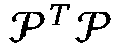 *= I,* based on a property of a compact wavelet frame, Equation (9) is converted into: ${argmin}_{d} \frac{1}{2} {\left‖H{D}_{x}^{T}d-p\right‖}_{2}^{2} + {μ}_{x} {\left|P\left(d\right)\right|}_{1} s . t . ω \geq 0$

Therefore, a Lasso problem model and a wavelet problem model are obtained through conversion. The foregoing model is solved by using an FISTA algorithm, to obtain the following iteration form: $\left\{\begin{matrix}{z}_{k} = {d}_{k} - {λD}_{x} {H}^{T} \left(H{D}_{x}^{T}{d}_{k}-p\right) \\ {g}_{k} = {Prox}_{P , {μ}_{x}} \left({z}_{k}\right) \\ {t}_{k} = \frac{1}{2} \left(1+\sqrt{1 + 4 {t}_{k - 1}^{2}}\right) \\ {d}_{k + 1} = {g}_{k} + \frac{{t}_{k - 1} - 1}{{t}_{k}} \left({g}_{k}-{g}_{k - 1}\right)\end{matrix}\right.$ where k is a current iteration round, λ is an iteration step size, tₖ is a factor for Nesterov acceleration processing, zₖ and gₖ are both intermediate iteration variables, and P_{c}(·) represents a non-negative constraint. Finally, a k^{th} iteration result of Equation (11) may be represented as *ωₖ*, satisfying: ${ω}_{k} = {P}_{c} \left({ω}_{k - 1}+{D}_{x}^{T}{d}_{k}+{D}_{y}^{T}{d}_{k}+{D}_{z}^{T}{d}_{k}\right)$

To further improve reconstructed image quality, an operator *Prox* in Equation (11) is converted into a learnable encoder-decoder structure, and is expanded to four directions of Dₓ, D_{y}, D_{z}, *and* **I,** which is collectively summarized as **Φ**(D). The iteration step size λ and a step size tₖ of a momentum are fixed or learnable hyper-parameters. In the figure and in the following simulation analysis, a networked model is referred to as a deep iterative network based on directional total variation (DTV) regularization (DTV-Net).

A meaning of the TPO is specially described below.

As described above, ω is volume data (also referred to as "volume block data"). p is a set of projection image data at all angles: p={p_{θ}|all projection angles θ}.

For a point ω(c) in a to-be-scanned object at a specific projection angle θ and a corresponding detector projection point p_{θ}(i, j), a system of equations for coordinates (i, j) thereof is established: $c + t \left(c-s\right) = {iu}_{s} + {jv}_{s}$ where t is an extension value of a ray (the foregoing is a three-dimensional system of equations, and t, i, and j are three variables, where values of t, i, and j may be uniquely solved), and is obtained by solving the foregoing system of equations by using Cramer's Rule (the value of t may be solved but is not used): $i = \frac{\left|c-s {ν}_{s} s-{d}_{s}\right|}{\left|{u}_{s} {ν}_{s} s-c\right|} , j = \frac{\left|{u}_{s} c-s s-{d}_{s}\right|}{\left|{u}_{s} {ν}_{s} s-c\right|}$

Therefore, an orthographic projection operator H may be represented as the following process: $H : ω \to p \left(θ\right)$ may be written as: *p_{θ}* = ∫*ₗω*(*l*)*dl, l = uₛi+vₛj - s*

A back projection operator HT may be represented as the following process: ${H}^{T} : \left\{p\left|p\left(θ\right) for all θ\right.\right\} \to ω$ may be written as: $ω \left(c\right) = \int \frac{1}{\left|l\right|} {p}_{θ} \left(i, j\right) dθ$

With the orthographic projection operator H and the back projection operator HT, the entire TPO operator may be represented as (λ is the step size): *ω*, *p* → *ω + λH^{T}*(*Hω - p*)*.*

It may be learned from the foregoing analysis that a TPO applicable to splicing of multi-panel detectors is provided in an iteration process of the orthographic projection and the back projection. A DTV-based deep learning model is adopted for a regularization term to enable end-to-end reconstruction of incomplete data in the static CT geometry. It is proved in an experiment that the proposed TPO effectively ensures consistency of the orthographic projection and the back projection during iterative reconstruction, so as to implement multilayer reconstruction with limited GPU resources. In addition, an iteration method for the DTV-Net has a function of removing a sparse/finite angle artifact, a structure artifact, and noise, thereby greatly improving imaging efficiency and quality of a static CT system. The tensorized operators of the orthographic projection and the back projection can be applicable to detectors of any shape, including a polygon detector of the static CT system. A deep reconstruction algorithm for the DTV-Net is applicable to both sparse angle and limited angle projection data, and therefore is applicable to a focus point displacement scanning manner of the static CT system. This scanning manner eliminates the need for large-scale rotation of a gantry, which can significantly increase the temporal resolution and the spatial resolution.

Technical effects of the image reconstruction method provided in embodiments of the present invention are described below by using simulation data.

The networked model DTV-Net in embodiments of the present invention is verified separately by using the simulation data and clinical data. A simulation data set includes the following two categories: an AAPM data set marked by Mayo Clinics, and a Cq500 data set. The AAPM data set includes 2,000 slices from 10 patients. A validation set accounts for 12.7%, and test volume blocks include 14 slices such as lungs and abdomens. The Cq500 data set includes 1,367 slices from 23 volunteers. A validation set accounts for 21.9%, and a test set includes 25 slices such as heads and chests.

The clinical data is obtained by collecting two phantoms including an anthropomorphic phantom and an anthropomorphic head model through 24-source static CT. A quantity of projection views collected for each phantom is equal to 1080, and a collection angle interval is equal to 0.33°. Structural parameters of the static CT system are as follows: R = 709 mm, r = 434.75 mm, z₀ = -56.3 mm, z₁ = 24.13 mm, a pixel size of each detector is 80×128, and each interval between pixels is 0.265 mm. In this test, a bixFDK reconstruction algorithm at 1080 angles is used to obtain a label (a truth-value drawing) of the clinical data.

In an experiment, the projection angle θ = {i ∈ 24N, 0 ≤ N ≤ 14|θᵢ, θᵢ₊₁, θᵢ₊₂}, that is, each source is displaced by 2° in an axial scan mode, that is, 3 projection images are generated. An angle interval of the three projection images is equal to 1°, and the three projection images form a cluster. Therefore, a total quantity of projection images (views) for the 24 sources is equal to 72. Therefore, it is defined that views represent a quantity of all projection images of 24 sources, and intervals represent projection angle intervals between the projection images in each source. A distribution of projection angles represented by views and intervals is shown in FIG. 3. A circumference represents a 360-degree scanning angle, and points on the circumference indicate that a projection image exists at the angle.

Structural parameters of the static CT system are used in both the simulation data set and the clinical data set. Software and hardware for the experiment are respectively based on a PyTorch framework and an Nvidia A100 GPU workstation.

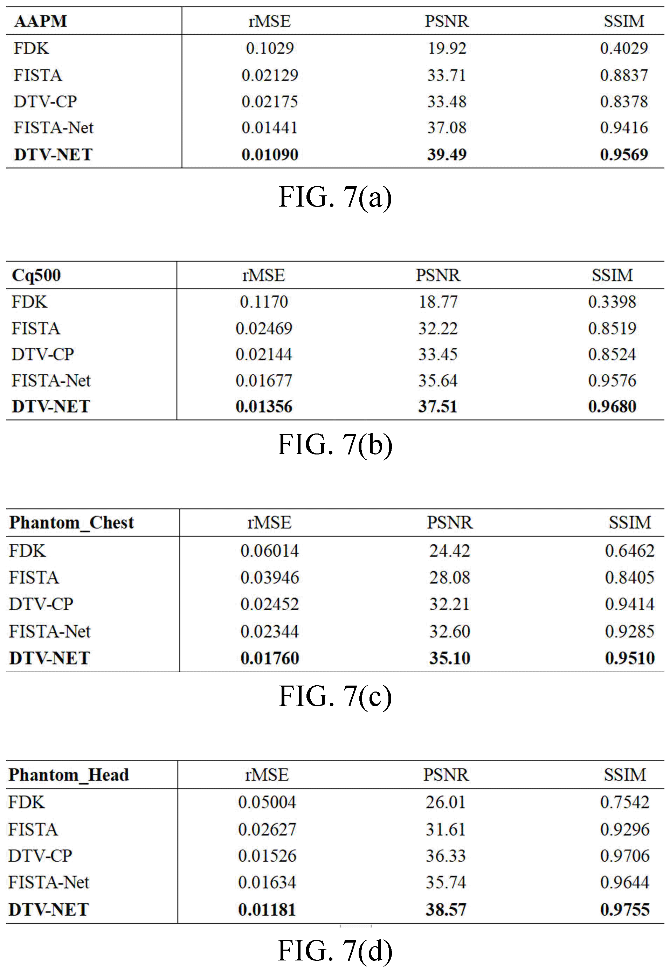

FIG. 7(a) to FIG. 7(c) show reconstruction results of the AAPM data set, the Cq500 data set, and the collected phantom data in different methods. A window width for image display is set to [0, 1500] HU. Image quality in different methods (FDK, FISTA, DTV-CP, FISTA-Net, and the DTV-Net method provided in the present invention) is evaluated by using rMSE, SSIM, and PSNR metrics. It may be seen from results that the highest image quality in the image reconstruction method (DTV-Net) provided in embodiments of the present invention is achieved by using the three metrics. A smaller rMSE and a higher PSNR mean that an image pixel is more accurate. A higher SSIM indicates better structure information of an image and a stronger anti-sparsity capability of a network.

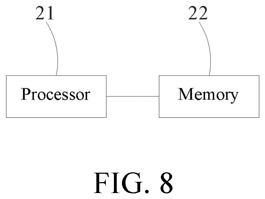

Based on the foregoing image reconstruction method based on a sparse view set, the present invention further provides an image reconstruction system based on a sparse view set. The image reconstruction system may be a static CT system, or may be a security check device, a non-destructive testing device, or the like. As shown in FIG. 8, the image reconstruction system includes one or more processors 21 and at least one memory 22. The memory 22 is coupled to the processor 21 and is configured to store one or more programs. The one or more programs, when executed by the one or more processors 21, cause the one or more processors 21 to implement the image reconstruction method based on a sparse view set in the foregoing embodiments.

The processor 21 is configured to control an overall operation of the image reconstruction system, to complete all or part of the steps of the foregoing image reconstruction method based on a sparse view set. The processor 21 may be a central processing unit (CPU), a graphics processing unit (GPU), a field-programmable gate array (FPGA), an application-specific integrated circuit (ASIC), a digital signal processing (DSP) chip, or the like. The memory 22 is configured to store various types of data to support operations in the image reconstruction system. The data may include, for example, instructions of any application program or method operating in the image reconstruction system, and data related to the application program. The memory 22 may be implemented by any type of volatile or non-volatile storage device or a combination thereof, for example, a static random-access memory (SRAM), an electrically erasable programmable read-only memory (EEPROM), an erasable programmable read-only memory (EPROM), a programmable read-only memory (PROM), a read-only memory (ROM), a magnetic memory, and a flash memory.

In an exemplary embodiment, the image reconstruction system may be specifically implemented by a computer chip or an entity, or implemented by a product having a specific function, and is configured to perform the foregoing image reconstruction method based on a sparse view set, and achieve the same technical effect as the foregoing method.

In another exemplary embodiment, the present invention further provides a computer-readable storage medium including program instructions. The program instructions, when executed by a processor, implement the steps of the image reconstruction method based on a sparse view set in any one of the foregoing embodiments.

A sequence of the steps in the foregoing embodiments may be adjusted based on an actual requirement, or another step may be inserted or added, for example, preprocessing volume data. In addition, a calculation formula may also be replaced with another equation, provided that a technical objective of each step is satisfied.

The image reconstruction method and system based on a sparse view set provided in the present invention are described in detail above. For a person of ordinary skill in the art, any apparent change made to the present invention without departing from the essential content of the present invention constitutes infringement of the patent right of the present invention and bears a corresponding legal responsibility.

## Claims

1. An image reconstruction method based on a sparse view set, wherein the method comprises the following steps:
obtaining a sparse angle projection graph set through CT scanning;
performing back projection on the sparse angle projection graph set, to obtain an initial iteration value of volume data;
calculating initial values of three directional gradient fields of the initial iteration value of the volume data;
calculating an orthographic projection and a back projection based on the initial iteration value of the volume data, the initial values of the three directional gradient fields, and the sparse angle projection graph set, to obtain tensorized operator (TPO) data;
performing regularization processing on the TPO data in four directions of x, y, z, and I through a neural network, to obtain intermediate values of gradients and intermediate values of the volume data in three directions, wherein x, y, and z represent three directions in a three-dimensional space, and I represents an identity matrix; and
performing addition on an integral of the intermediate values of the volume data and the intermediate values of the gradients to serve as an initial value for a next iteration, performing iteration again until completion, and outputting a result.

2. The image reconstruction method based on a sparse view set according to claim 1, wherein
the regularization processing comprises performing the regularization processing in the four directions of Dₓ, D_{y}, D_{z}, and **I,** and
*Dₓ, D_{y}*, *D_{z}* represent directional gradient operators calculated in the three directions of x, y, and z.

3. The image reconstruction method based on a sparse view set according to claim 2, wherein
the regularization comprises performing **Φ**(D) expansion computation, to implement expansion of the TPO data in all directions by using the directional gradient operators *Dₓ, D_{y}*, *D_{z}*, wherein
**Φ**(D) represents a network for sparsifying a directional gradient, D ∈ {Dₓ, D_{y}, D_{z}, I}, and four sub-networks share weights in all iterations.

4. The image reconstruction method based on a sparse view set according to any one of claims 1 to 3, wherein
the regularization is implemented by converting features into a sparse space through an encoder, then performing feature weighting on an image in the sparse space by using a shrinkage thresholding function, and finally restoring the image to an original size through a decoder.

5. The image reconstruction method based on a sparse view set according to claim 4, wherein
the shrinkage thresholding function **I**(x; µ') is represented as **I**(f; µ') = sign(f)max (|f| - µ', 0),
wherein f represents an output of the encoder, and µ' represents a shrinkage threshold and is related to coefficients µₓ, µ_{y}, and µ_{z}.

6. The image reconstruction method based on a sparse view set according to any one of claims 1 to 3, wherein
the TPO data is obtained through the following equations: ${z}_{k} = {ω}_{k} + {λH}^{T} \left({Hω}_{k}-p\right)$ ${z}_{k}^{x} = {D}_{x} {ω}_{k}^{x} + λ {D}_{x} {H}^{T} \left({Hω}_{k}^{x}-p\right)$ ${z}_{k}^{y} = {D}_{y} {ω}_{k}^{y} + {λD}_{y} {H}^{T} \left({Hω}_{k}^{y}-p\right)$ ${z}_{k}^{z} = {D}_{z} {ω}_{k}^{z} + {λD}_{z} {H}^{T} \left({Hω}_{k}^{z}-p\right)$
wherein k represents a current iteration round, λ represents an iteration step size, *ωₖ* represents a k^{th} iteration result of ω, $ω = {D}_{x}^{T} d$*,* d refers to a gradient field during iteration, Hω represents projection data of the orthographic projection process in reconstructed data, and H^{T}ω represents projection data of the back projection in the reconstructed data.

7. The image reconstruction method based on a sparse view set according to claim 6, wherein
the performing addition on an integral of the volume data and the gradient fields refers to performing addition on the integral of the volume data and the gradient fields to obtain volume data ***ωₖ*** of a quantity of current iterations: ${ω}_{k} = {P}_{c} \left({ω}_{k - 1}+{D}_{x}^{T}{d}_{k}+{D}_{y}^{T}{d}_{k}+{D}_{z}^{T}{d}_{k}\right)$
wherein P_{c}(·) represents a non-negative constraint, and ${D}_{x}^{T} , {D}_{y}^{T}$*,* and ${D}_{z}^{T}$ respectively represent inverse operations of the directional gradient operators *Dₓ, D_{y}*, *D_{z}* in the directions of x, y, and z.

8. The image reconstruction method based on a sparse view set according to claim 7, wherein before the step of performing addition on the integral of the intermediate values of the volume data and the intermediate values of the gradients, the method further comprises performing Nesterov acceleration processing on the three directional gradient fields.

9. The image reconstruction method based on a sparse view set according to claim 8, wherein the acceleration processing is performing calculation through the following equation: ${d}_{k + 1} = {g}_{k} + \frac{{t}_{k - 1} - 1}{{t}_{k}} \left({g}_{k}-{g}_{k - 1}\right)$ wherein k is the current iteration round, tₖ is a factor for Nesterov acceleration, *gₖ* is a directional gradient field in one of the directions x, y, and z for the current iteration round, ***dₖ*=D*ωₖ*,** and D represents the directional gradient operators *Dₓ, D_{y}, D_{z}.*

10. An image reconstruction system based on a sparse view set, comprising a processor and a memory, wherein the processor reads a computer program in the memory, to implement the image reconstruction method based on a sparse view set according to any one of claims 1 to 9.
